# EUROPEAN PATENT APPLICATION

(11) **EP 0 712 220 A1**
(43) Date of publication of application: **15.05.1996**
(21) Application number: 94480125.7
(22) Date of filing: 08.11.1994
(51) Int. Cl.: H04L 12/56, H04Q 11/04

(54) **Hop-by-hop flow control in an ATM network**

(71) Applicant: International Business Machines Corporation, Armonk, N.Y. 10504 (US)
(72) Inventor: Calvignac, Jean, F-06610 La Gaude (FR); Orsatti, Daniel, F-06800 Cagnes sur Mer (FR); Verplanken, Fabrice, F-06610 La Gaude (FR); Basso, Claude, F-06200 Nice (FR)
(74) Representative: Lattard, Nicole

(57) **Abstract**

A communication system comprises a plurality of hops interconnected by links comprising a plurality of connections. The traffic between the hops is shared between a reserved bandwidth service and a non reserved bandwidth service. The control of said non reserved bandwidth service comprises a hop by hop backpressure mechanism. When the traffic entering a hop exceeds a low/high threshold, the backpressure mechanism generates start/stop backpressure primitives in order to resume/throttle the entering traffic. In case of congestion the mechanism is either able to selectively stop the connection contributing to the congestion without affecting the rest of the link traffic, or to globally stop the whole link traffic.

## Description

### Field of the invention:

This invention relates in general to a networking communication system and more particularly to a flow control mechanism to support best effort service in a high speed ATM network.

### Background art:

Asynchronous Transfer Mode (ATM) is to become the base technology for the next generation of high speed networks.

High speed networks support a great diversity of applications with different traffic and Quality Of Service ( QOS ) requirements. Such diversity require different control flow strategies. For example, certain applications like multi-media and time critical data applications require guaranteed levels of delay and throughput but can tolerate losses, while others like LAN traffic can tolerate variations in delay and throughput but are very loss sensitive.

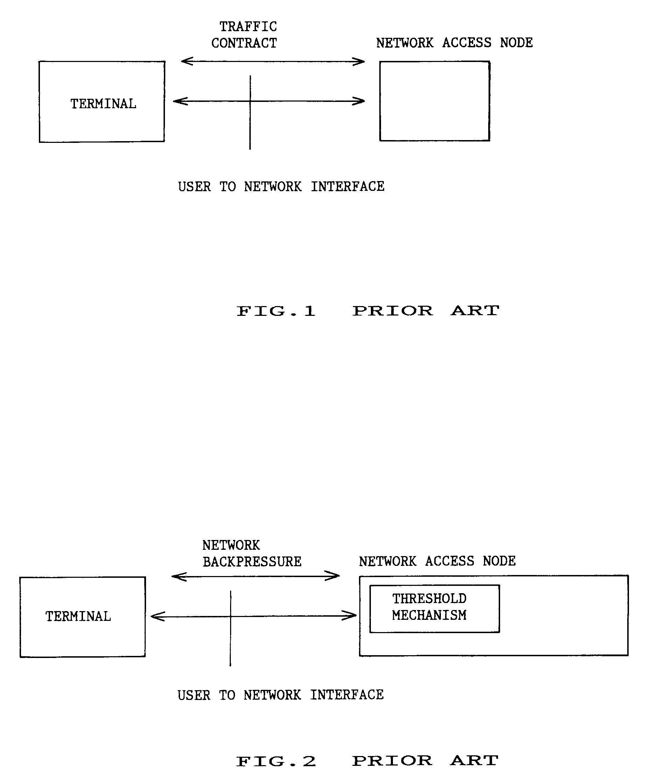

In the ATM Reserved Bandwidth ( RB ) service, a user needs to establish a traffic contract with the network at call set-up before transmitting data (see Fig. 1). The contract includes specification of a desired QOS class and a set of traffic descriptors. The network, through resource allocation, provides the desired QOS for the ATM connection or refuses the call. The allocated bandwidth between a source and a destination may be less than the peak rate in order to benefit from statistical multiplexing gains, but it requires complex software and may cause traffic congestion and data losses.

In a LAN environment, sources are bursty and unpredictable. Traffic has an extremely high variability on time scales ranging over several orders of magnitude. For such unpredictable sources, the peak rate could be allocated in order to avoid heavy losses inside the network. However, the network would be inefficiently used, since bandwidth would be reserved even during idle periods.

One way to increase link utilization for the network is through the addition of a Non Reserved Bandwidth ( NRB ) service class still called Best Effort ( BE ) service (see Fig. 2). In this service class, no bandwidth at all is reserved and the sources can transmit on a best effort basis, grabbing as much bandwidth as they can, without affecting the RB traffic. Thus, no resources being allocated in advance, the NRB service requires a control flow scheme in order to control the sources . The first objective is to avoid congestion in the network, the second objective is to balance the traffic between the different sources. The backpressure concept, which is one such scheme, has been extensively studied and already implemented. Its principle is to stop at a congested node of the network incoming traffic before losses occur. The information is carried by a backpressure signal which stops or starts the traffic coming from the upstream nodes in the network. In this scheme, every source is supposed to be able to stop or restart its NRB traffic when receiving an appropriate backpressure signal. The backpressure concept is for example described by T. L. Rodeheffer in 'Experience with Autonet' ,Computers Networks and ISDN Systems, vol. 25,1993, p. 623-629.

The drawback of simple backpressure mechanisms such as the one described in the above mentioned document is that they are unable to provide fairness: in case of congestion, a node will send backpressure signals backwards to its upstream nodes, spreading congestion and blocking connections indifferently, whether they contribute or not to the congestion. To provide fairness, the backpressure information must be selective and must operate only on those connections that are contributing to congestion.

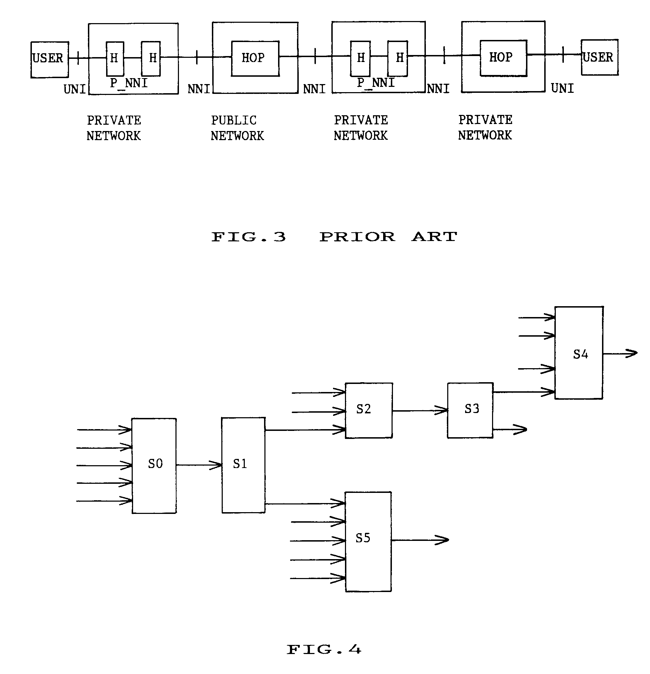

Such a selective congestion mechanism is described by B. J. Vickers and T. Suda in 'Connectionless Service for Public ATM Networks', IEEE Communications Magazine, August 1994, p. 34-42 : a scheme through which best effort service may be provided in ATM networks using hop by hop flow control is suggested. A hop is well known in the prior art (see Fig. 3) and can be defined as any network element with a standard interface at its edges, standard interface being either a User to Network Interface ( UNI ), or a Network to Network Interface ( NNI ), or a Private Network to Network Interface ( P_NNI ). With such a definition, a hop can either be an entire public or private network or only an ATM switch in a network. One of the drawbacks of the mechanism described in the latter document is that when a node has to throttle the traffic of a link comprising a great number of connections it has to do it one connection at a time. Due to the addition of the propagation delay of each connection, the number of ATM cells stored in the buffers, after the signal has been sent and before the whole traffic actually stops, is very large. In order to guarantee a no loss traffic, the required buffer space becomes prohibitively large and is incompatible with an efficient hardware implementation. Moreover the resultant transmission of all the stored cells would require a too large delay.

### Summary of the invention:

Accordingly, an object of the present invention is to provide a traffic control apparatus which can be fair and loss free even with small buffer capacity.

To attain the above object, there is provided, according to the present invention, a traffic control apparatus for controlling traffic in a communication system. The communication system comprises a plurality of hops interconnected by links. Each link comprises a plurality of connections which are shared between a reserved bandwidth service and a best effort service. The best effort service is supported by both a per connection and a global hop by hop backpressure mechanism. The backpressure mechanism encompasses two primitives, a selective backpressure primitive which allows any hop to control one connection, and a global backpressure primitive which, in case of global congestion, allows any hop to control one link without sending as many selective backpressure primitives as there are of best effort connections and, blocks the traffic at a link level. More particularly, the invention consists in a traffic control apparatus implemented in a communication system comprising a plurality of hops interconnected by links, said links comprising a plurality of connections wherein said traffic within said connections is shared between a best effort service and a reserved bandwidth service, characterized in that at each hop said best effort service control comprises both a per connection and a global hop by hop backpressure mechanism. Each hop comprises a queuing area providing a queue per NRB connection attached to the hop. A connection is considered as active if there is at least one traffic cell queued in its attached queue. The backpressure primitives are generated by a hop when the traffic entering the hop exceeds predetermined global and selective thresholds. These selective thresholds being dynamically adjusted according to the number of active connections coming from upstream hops.

A further object of this invention is to provide an efficient traffic control apparatus, wherein traffic control information is never blocked on a congestioned link or connection, this being achieved by reserving a part of the reserved bandwidth service for the traffic control of the best effort service and conveying traffic control cells of said best effort service on said reserved part.

Another further object of this invention is to provide a traffic control apparatus which generates reduced traffic control, this being achieved by embedding from one to twelve selective control information and one global control information in each of said traffic control cell.

### Brief description of the drawings:

The above object and features of the present invention will be more apparent from the following description with reference to the accompanying drawings, wherein:
Figure 1 is a diagram of a conventional Reserved Bandwidth service.
Figure 2 is a diagram of a conventional Non Reserved Bandwidth service.
Figure 3 is a diagram of a network comprising a plurality of hops.
Figure 4 is a general view of a six hops configuration.
Figure 5 is a detailed view of a hop by hop flow control implementation according to the preferred embodiment of this invention.
Figure 6a is a diagram of a hop input buffer structure.
Figure 6b is a diagram of a hop output buffer structure.
Figure 7a is an operation flow of a global stop backpressure generation.
Figure 7b is an operation flow of a global stop/start backpressure reception.
Figure 7c is an operation flow of a global start backpressure generation.
Figure 8a is an operation flow of a selective stop backpressure generation.
Figure 8b is an operation flow of a selective stop/start backpressure reception.
Figure 8c is an operation flow of a selective start backpressure generation.
Figure 9 shows the table of the selective thresholds adjustment.
Figure 10 depicts an ATM flow control cell.

### Detailed description of the preferred embodiment:

FIG. 4 shows a six hop configuration in which a hop by hop flow control is implemented. Each one of the hops S0,S1...S5 can receive flow control information from the hops to which it sends data traffic, said hops being defined in reference to said receiving hop as downstream hops, and can also send flow control information to the hops from which it receives data traffic, said hops being defined in reference to said sending hop as upstream hops. For example if S1 is considered the reference hop, S0 is the upstream hop of S1 ,and S2 and S5 are the downstream hops of S1.

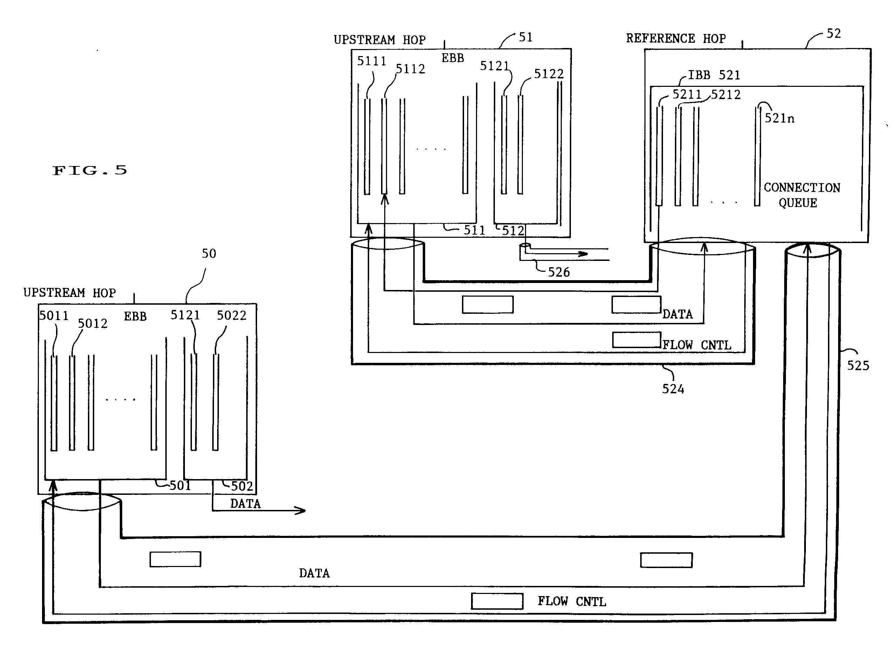

FIG. 5 is a detailed view of FIG. 4 showing in a generic way how three interconnected hops 50, 51 and 52 are interworking. Only the data traffic from hops 50 and 51 to hop 52 and the control traffic from hop 52 to hops 50 and 51 are shown. But as ATM is full duplex, the reverse paths, data traffic from hop 52 to hops 50 and 51 and the associated flow control are also implemented. In the preferred embodiment of this invention a connection is defined as a switch virtual circuit in an ATM virtual circuit service but it can also be defined as a virtual circuit in an ATM virtual path service or as a couple of Medium Access Control ( MAC ) addresses ( MAC source address, MAC target address) in an ATM local area network emulation service. Each hop has at its ingress an input buffer 521 dedicated to the best effort traffic, say IBB, and at its egress an output buffer 501, 502, 511, 512 per output port Pj dedicated to the best effort traffic say EBB(Pj). Hops 50, 51 and 52 are connected by a UNI or NNI interface. Data cells received by hop 52 are queued in a queuing area providing a queue 5211, ...521n per connection established between the three hops. The flow control information can either apply to a best effort connection of an upstream hop or to the entire best effort traffic of all upstream hops. Hop 52 can receive data from several upstream queues 5011 and 5012 from queueing area 501, 5111 and 5112 from queueing area 511. In that case flow control information applying to a single connection ( selective backpressure) will be issued to the corresponding queuing area, whereas flow control information applying to the entire best effort traffic (global backpressure) will be sent to each upstream hop 50, 51 feeding hop 52. In the case of flow control information applying to a single best effort connection (selective backpressure ), only this connection will be throttled. For example if queue 5211 exceeds the selective threshold of hop 52, a selective stop backpressure connection 5211-5112 is sent on link 524 and the hop 51 will stop scheduling queue 5112 when receiving the selective backpressure information. In the case of a flow control information applying to the entire best effort traffic (global backpressure ), the throttled traffic will be all the best effort traffic transmitted between concerned hops. For example if queuing area 521 exceeds the global threshold of hop 52, a global stop backpressure links 524 and 525 is sent on said links. The hop 50 will stop scheduling all connections of queueing area 501 when receiving the global backpressure information, but queuing area 502 may keep flowing. The hop 51 will stop scheduling all connections of queuing area 511 when receiving the global backpressure information, but queuing area 512 may keep flowing.

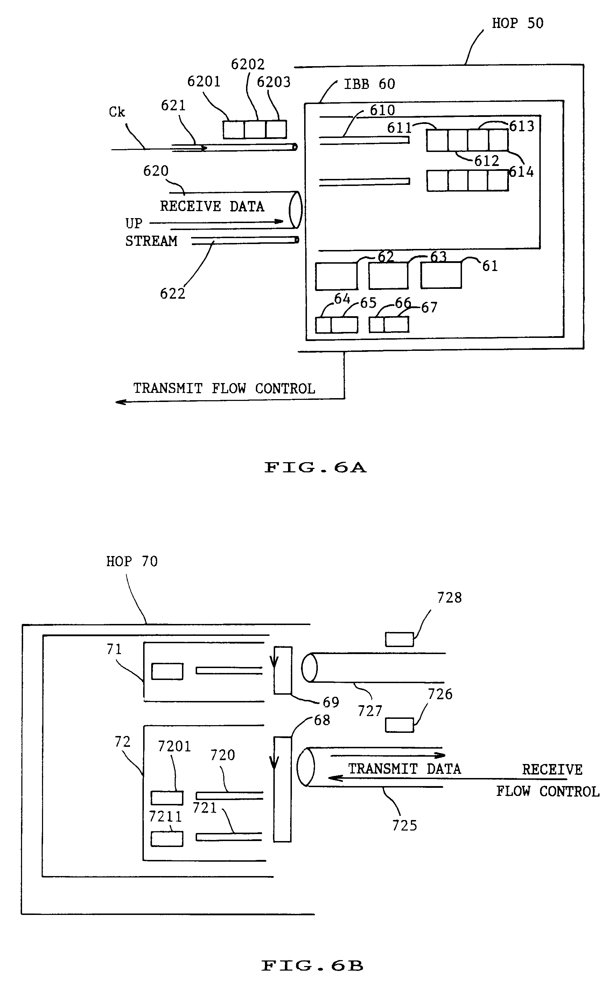

FIG. 6a depicts a hop input buffer structure and the data flow and control flow received and transmitted by any hop in the network. Flow control is transmitted from the queuing area to the appropriate upstream node and is triggered by the various up and down thresholds 64, 65, 66 and 67 provided by the queuing scheme. There are one high and one low global thresholds 64, 65 per IBB, and one high and one low selective thresholds 66, 67 per IBB. GBPX bit 61 indicates whether links entering IBB 60 are globally backpressured. Counting means 62 represent the number of active connections NAC in said IBB, counting means 63 represent the total number of cells queued in the different queues of said IBB and counting means 611 are associated with queue 610 for counting the number of cells queued in said queue. CBPX bit 612 indicates whether the connection 610 is backpressured and counting means 613 CBPXCNT represent the number of cells received by connection 610 since said connection has sent a backpressure information. SD bit 614 indicates whether the cells conveyed by said connection 610 are to be discarded or not. With each link 620 entering said IBB 60 are associated indicating means 6201, 6202, 6203. 6201 represents the latency of said link 620. Said latency is defined later in the present description. Counting means 6202 represent the number of cells queued in the different queues corresponding to said link 620 since said link has sent a global backpressure information. The PD bit 6203 indicates whether the cells conveyed by said link are to be discarded or not.

FIG. 6b depicts a hop output buffer structure and the data flow and control flow received and transmitted. There is one output buffer for best effort service EBB 71, 72 per outgoing link 727, 725. Flow control is received from a downstream node and triggers adequate actions in the round robin schedulers 68 and 69. When a connection issuing to queue 721 is selectively backpressured by a downstream hop, the associated connection backpressured bit CBPR 7211 is set to one and said queue 721 is desinserted from the round robin scheduler. When a link 725 is globally backpressured by a downstream hop, the associated global backpressure bit GBPR 726 is set to one and the round robin scheduler 68 associated with said link 726 is stopped.

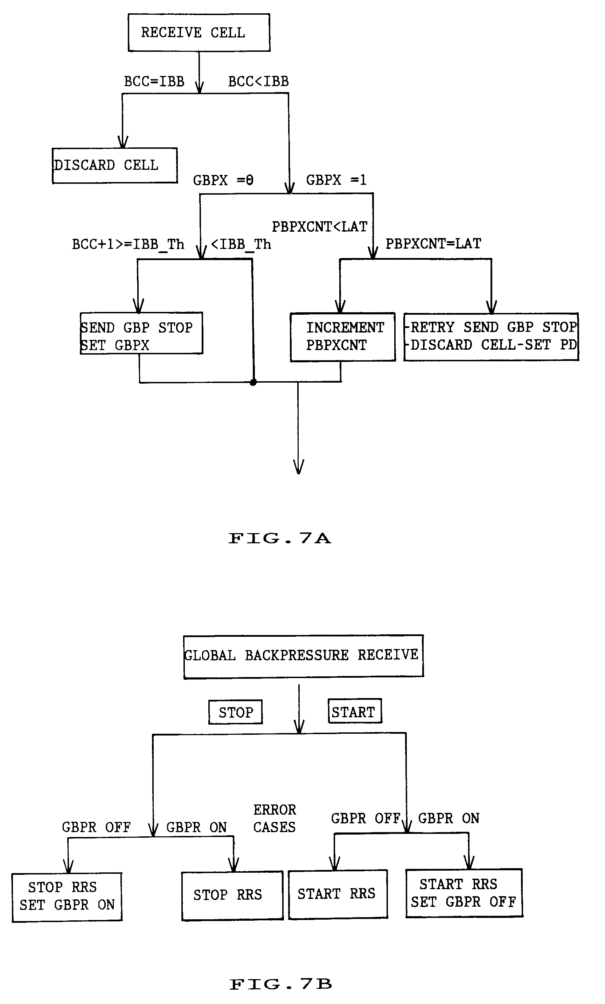

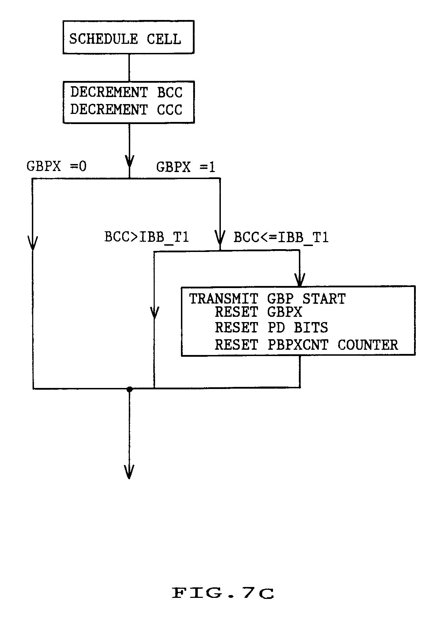

FIG. 7a is an operation flow of a global stop backpressure generation and FIG 7b is an operation flow of a global stop/start backpressure reception. The global stop handling will now be explained with reference to figures 6a, 6b, 7a and 7b. When a cell is received in the IBB 60 of a hop 50, from a port Pi, if the number of cells 63 queued in the IBB 60 is equal to the IBB global high threshold value 64 (IBB_Th) and if the upstream hops entering said hop are not already backpressured ( GBPX bit 61 to 0 ) then, hop 50 sends backwards on every input port Pi a global backpressure with the information 'global stop ' and sets the GBPX bit to 1. As it is described in FIG. 7b, the upstream hop receiving it will stop scheduling cells out of its EBB(Pi) until it receives a ' global start ' information. This is done by stopping the round robin scheduler 68. Due to the round trip delay of the information transmission, extra cells may be received. The reference hop 50, which is the hop sending the backpressure signal, increments the PBPXCNT counter of port Pi when receiving extra cells from said port Pi. The latency value of a link is the number of cells queued in the queuing area of a hop during a round trip delay of a cell between said hop and an upstream hop at the extremity of said link When the PBPXCNT counter reaches the link latency value LAT, the reference hop sets the port discard bit ( PD ) of said link, discards the cell and retransmits the global stop backpressure information. Every other incoming cell from said link will be discarded until the port discard bit of said link is reset. Instead of discarding the incoming cells another alternative when the PBPXCNT counter reaches the LAT value is to tag and accept said cells and to discard them later if a severe congestion occurs. For the setting of the latency value a safety margin may be added to the round trip delay in order to take into account the time necessary for processing the backpressure information in the upstream hop.

FIG. 7c is an operation flow of a global start backpressure generation. The global start handling will now be explained with reference to figures 6a, 6b, 7b and 7c. When a cell is transmitted from the IBB 60 of a hop 50, if the number of cells 63 queued in the IBB 60 is equal to the IBB low global threshold 65 (IBB_Tl) and if the upstream hops entering said hop 50 are already backpressured (bit GBPX to 1) then, the hop 50 sends backwards to all upstream hops a global backpressure signal with the information 'global start ', resets the PD bits, the PBPXCNT counters and the GBPX bit. As it is described in FIG. 7b, each upstream hop will resume scheduling cells out of its EBB(Pi), where Pi is port-connected to the reference hop. This is done by restarting the round robin scheduler. The traffic from selectively backpressured connections which queues are not inserted in the round robin scheduler is not restarted.

Two points need to be considered when defining the global thresholds of the queuing area of a hop. First point deals with the high global threshold of said hop. In order to ensure a loss free operation, the threshold must be set up so that the extra queuing area above the threshold is greater than the aggregate latency of the upstream hops connected to said hop. That can be expressed as follows : 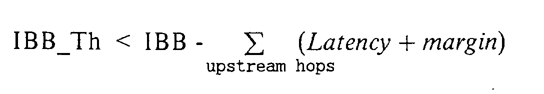
Second point deals with the low global threshold of said hop which must be chosen high enough in order to ensure a no-underrun operation. The high global threshold IBB_Tl must be set up so that the extra queuing area below the low global threshold is greater than the minimum latency or round trip delay of the upstream hops of said hop. That can be expressed as follows :$\text{IBB_Tl > Minimum(Latency)}$ However, a low global threshold value too close to the high one, would lead to numerous threshold crossings which in turn would lead to an overhead of control information. According to the preferred embodiment of this invention the global low threshold value has been defined as half the global high threshold value. That meets the no-underrun condition while being an acceptable trade off between traffic control overhead and traffic underun.

As shown in FIG 6, two selective thresholds are defined in the IBB of a hop. The high selective threshold 66 (IBB_STh) and the low selective threshold 67 (IBB_STl) are common to all active connections of said IBB.

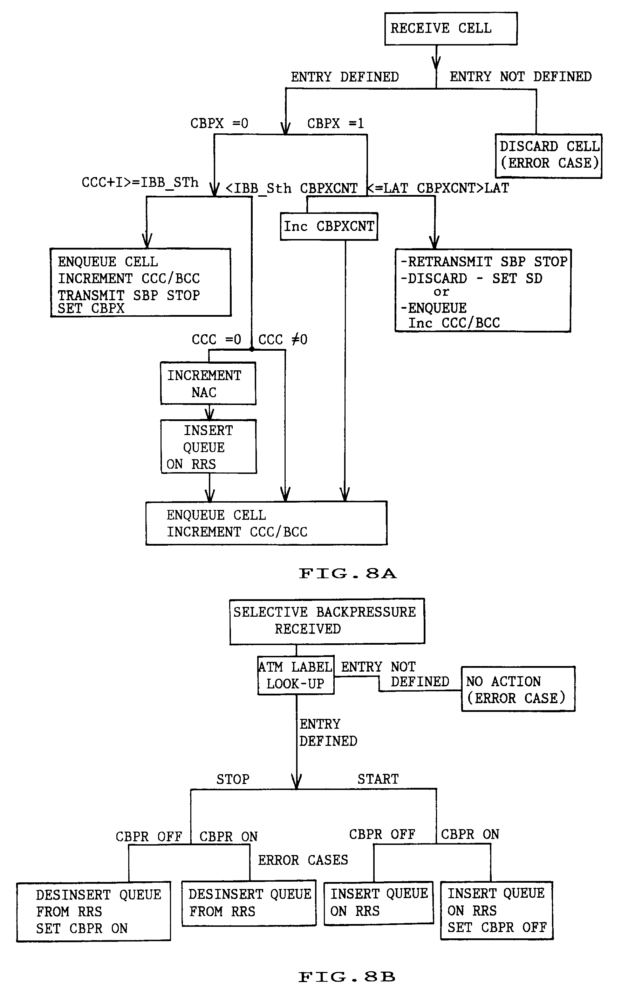

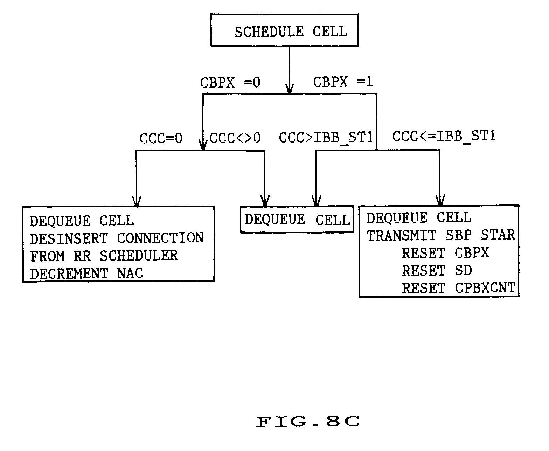

FIG. 8a is an operation flow of a selective stop backpressure generation and FIG. 8b is an operation flow of a selective stop/start backpressure reception. The selective stop handling will now be explained with reference to figures 6a, 6b, 8a and 8b. When a cell is received in the IBB 60 of a hop 50 from a connection Ck issuing to queue 610 and the number of cells 611 from queue 610 on port Pi queued in the IBB is equal or greater than IBB_STh 66 and the connection Ck is not already backpressured then, the hop sends backwards on port Pi a selective backpressure with the information 'selective stop connection Ck '. As it is described in FIG. 8b the hop receiving it will stop scheduling cells from connection Ck out of its EBB(Pi) until it receives a selective start connection Ck information. This is done by desinserting the queue of the connection from the round robin scheduler. The hop which has sent the backpressure signal sets the connection backpressured transmitted bit CBPX in the connection control block to one, which in turn will enable the cells counter of the connection CBPXCNT. All cells received from the backpressured connection will be counted until selective start is sent. In case the counter reaches the maximum allowed value LAT, which is the latency of the link comprising said connection Ck, the selective discard bit SD in the connection control block is set and the backpressure signal is sent again. In the preferred embodiment all cells received from connection Ck when the SD bit is set are discarded. FIG. 8c is an operation flow of a selective start backpressure generation. The global start handling will now be described with reference to figures 6a, 6b, 8a and 8c. When a cell from connection Ck is transmitted from the IBB and the number of cells from connection Ck on port Pi queued in the IBB is equal or lower than IBB_STl and the connection Ck is selectively backpressured, the hop sends backward on port Pi a selective backpressure with the information selective start connection Ck. The hop receiving it will resume scheduling cells from connection Ck out of its EBB if the link comprising said connection Ck is not globally backpressured. This is done by reinserting the queue of connection Ck in the round robin scheduler. The hop which has sent the backpressure signal resets the CBPX and SD bits and the CBPXCNT counter of connection Ck to 0.

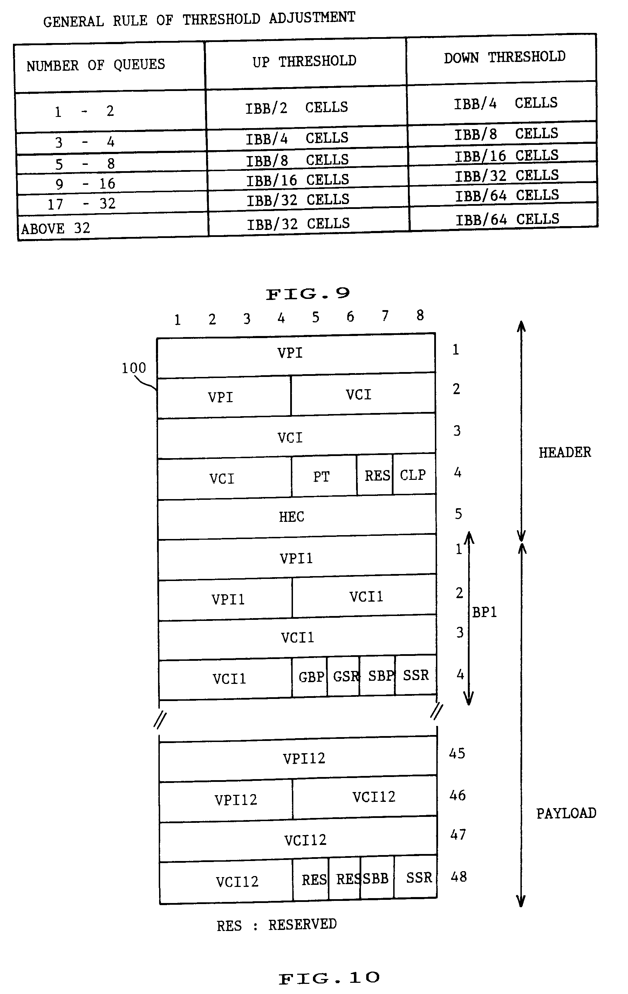

FIG. 9 shows the table of the selective thresholds adjustment. Several constraints need to be taken into account when defining the high and low selective thresholds of a queuing area. Values have been chosen so that the offered service is fair, underrun conditions are not enabled and control traffic is as reduced as possible. The fairness issue theoretically requires that the selective threshold high value is the result of the division of the queuing area size by the number of active connections NAC. That can be expressed as follows :$\text{IBB_STh = IBB/NAC}$ Such a theoretical relation is not easy to implement, since the result of this division seldom is an integer. On the contrary the general rule of threshold adjustment described in FIG. 9 is easy to implement and meets all the requirements cited above. Several comments need to be done on this general rule of threshold adjustment.

In case the number of active connections' is the lowest value in the NAC range value, e.g. 5 in the range 5-8, the result obtained by multiplying NAC by IBB_STh is lower than the size of the buffer. This could be interpreted at first sight as bad network resource utilization. However a first point is that the non used part of the buffer say ($\text{IBB - ( NAC * IBB_STh)}$ ) decreases when the number of active connections increases. As a matter of fact, utilization is 50% in the case of a single active connection, while it is 97% in the case of 31 active connections and 100% when the number of active connections is greater than 32. A second point is that in the case of few active connections, the high selective threshold is high enough in order to not penalize the connection. For example in case the queuing area is 2048 cell buffers, a single active connection can utilize 1024 cell buffers (IBB / 2). If the connection traffic fills this area, the upstream connection path is less saturated than the downstream connection path. The role of the hop is then to regulate the incoming upstream traffic in order to adapt it to the downstream possibilities. In this view, it is not necessary to authorize the connection to use a large queuing area and 1024 cell buffers could even appear as a high value. However this value allows the hop to smoothly play its role of upstream rate adaptation. A third point is that the environment in which the proposed scheme operates is highly dynamic and the number of active connections is permanently evolving. The non used buffer area provided by the threshold adjustment rule leaves free buffers for new active connections.

Above thirty two active connections, the selective threshold high value does not evolve and remains equal to 64 buffers. This could be interpreted at a first sight as a fairness issue. However decreasing the high selective threshold when the number of active connections increases would lead to very small threshold values. For example in case the queuing area is 2048 cell buffers and the number of active connections 512, with the application of the fairness definition, the high threshold value would be 4 buffers. This would obviously lead to an unacceptable control traffic overhead since the number of queued cells for a given connection would often cross the high or low threshold values. The proposed threshold adjustment rule minimizes control traffic. Moreover, even though the threshold value is not the theoretical one, the queuing area is well shared between the active connections :
if all the active connections have a number of queued cells equal to the threshold then there cannot be more than 32 active connections and the queuing is ideal;
if the number of active connections is greater, 512 for example, then the number of active connections whose queue is filled at threshold value is necessarily limited. If there are 10 connections at threshold value then the remaining 502 connections have a mean number of queued cells equal to (2048 - (10*64))/(512-10) = 2.8 cells. Since the 10 connections that have reached the threshold value are selectively stopped, and since the round robin scheduler 68, which out of queuing area, is fair, then the remaining 502 connections will progressively take more buffers. This will lead the system to its equilibrium which is 4 buffers per connection which is a perfect share of Input Best effort Buffer.

FIG. 10 is a view of the general format of an ATM flow control cell according to the preferred embodiment of this invention. A private ATM cell is used to convey the backpressure information. The traffic of flow control cells of the best effort service utilizes the reserved bandwidth service and hence benefits from its QOS : low delay and good cell loss ratio. Low delay contributes to a minimum round trip delay while a good cell loss ratio minimizes the occurrences of the loss of a control cell. One such control cell may be sent every twelve cell slot at maximum. Hence the reserved bandwidth for the best effort flow control traffic is 8% of the link bandwidth. The flow control traffic is TDM like ( Time Delay Multiplex ) in the sense that when the twelfth cell slot occurs, if there is a backpressure information to send, then the control cell is transmitted even if there are waiting cells in the reserved bandwidth service queue. In case there is no control information to send, the cell slot is used to transmit a cell of the reserved bandwidth service, or if the reserved bandwidth service queue is empty, to send a cell of the best effort service. The flow control cell is identified by a dedicated connection identifier: VPI ( Virtual Path Identifier ) and VCI ( Virtual Channel Identifier ) and a dedicated PTI ( Payload Type Identifier ) type, PTI = 110. The cell loss priority bit CLP is set to 0. The HEC field ( Header Error Control ) is used for correction of bit errors in the cell header. The cell payload contains all the information relative to the backpressure signal. In case of a selective backpressure signal, the information to convey is the virtual channel identifier (VPI-VCI) of the connection concerned by the backpressure signal along with the backpressure command (selective stop or start ). In the preferred embodiment of this invention, the information is defined in a four bytes field in the cell payload called hereafter a pressure slot. In this field, the VPI-VCI is located just like a regular VPI-VCI in the header of an ATM cell. The GBP bit indicates whether the cell contains a global backpressure information and the SBP bit whether the pressure slot contains a selective backpressure information. The GSR bit, respectively SSR bit, indicate whether said global information, respectively selective information, is a start or a stop information.

The private cell can transport twelve backpressure slots in the 48 bytes payload. This allows one flow control cell to carry from one to twelve selective backpressure informations and hence this implementation reduces the bandwidth required by the flow control traffic versus a one-for-one implementation. In addition the implementation speeds up the transmission of the backpressure information. If less than twelve backpressure informations are to be sent, they will use in the control cell contiguous pressure slots starting from the first one. In case of a global backpressure signal, the information to convey is the stop or start command. In the preferred embodiment of this invention, the global stop/start backpressure command is encoded with two bits in the first pressure slot of the private cell.

## Claims

1. Traffic control apparatus implemented in a communication system comprising a plurality of hops (50, 51, 52) interconnected by links (524, 525) said links comprising a plurality of connections, wherein said traffic within said connections is shared between a best effort service and a reserved bandwidth service, characterized in that at each hop said best effort service control comprises both a per connection and a global hop by hop backpressure mechanism.

2. Traffic control apparatus according to claim 1 wherein said hop by hop backpressure mechanism generates backpressure primitives to upstream hops when the traffic entering said hop exceeds predetermined thresholds(64, 65, 66, 67).

3. Traffic control apparatus according to any of the preceding claims, wherein each hop comprises an input buffer of size N (521) and an output buffer of size M (511, 512) per outgoing link ( 524, 526) both dedicated to best effort traffic, M and N being integers greater than 1, said buffers comprising a queuing area providing a queue (5111, 5112, 5211, 5212) per connection attached to said hop, said connection being considered active if there is at least one traffic cell queued in its corresponding queue.

4. Traffic control apparatus according to claim 3 wherein said input buffer (60) comprises a high global threshold IBBth (64) and a low global threshold IBBtl (65) with $\text{IBBth > = IBBtl}$, said high threshold being set so that the extra buffering area within said input buffer, above said said high threshold, is greater than the aggregate round trip delay of the upstream hops, said low threshold being greater than the minimum round trip delay of the upstream hops.

5. Traffic control apparatus according to claim 3 or 4 wherein said input buffer comprises a high selective threshold IBBsth (66) and a low selective threshold IBBstl (67) with $\text{IBBsth > = IBBstl}$, said thresholds being dynamically adjusted according to the number of active connections coming from upstream hops

6. Traffic control apparatus according to claim 5 wherein at each hop said low and high selective thresholds IBBstl and IBBsth are adjusted according to the following rule
- if the number of active connections entering said hop is comprised between 1 and 2, then $\text{IBBsth = N/2}$ and $\text{IBBstl = N/4}$
- if the number of active connections entering said hop is comprised between 3 and 4, then $\text{IBBsth = N/4}$ and $\text{IBBstl = N/8}$
- if the number of active connections entering said hop is comprised between 5 and 8, then $\text{IBBsth = N/8}$ and $\text{IBBstl = N/16}$
- if the number of active connections entering said hop is comprised between 9 and 16, then $\text{IBBsth = N/16}$ and $\text{IBBstl = N/32}$
- if the number of active connections entering said hop is comprised between 17 and 32, then $\text{IBBsth = N/32}$ and $\text{IBBstl = N/64}$
- if the number of active connections entering said hop is greater or equal than 33, then $\text{IBBsth = N/32}$ and $\text{IBBstl = N/64}$

7. Traffic control apparatus according to any of claims 2 to 6, wherein when the number of cells queued in the buffer area of a hop connection exceeds said high dynamic selective threshold (66), said hop sends backwards on the link comprising said connection a selective backpressure with the 'selective stop said connection' information.

8. Traffic control apparatus according to any of claims 2 to 7, wherein when the number of cells queued in the buffer area of a connection is equal or lower than said dynamic low selective threshold (67) and said connection is selectively backpressured, the hop sends backwards on the link comprising said connection a selective backpressure with the 'selective start said connection' information.

9. Traffic control apparatus according to any of claims 2 to 8, wherein when the number of cells queued in the queuing area of a hop exceeds said high global threshold (64), said hop sends backwards on the upstream links entering said hop a global backpressure with the 'global stop said entering links' information in order to globally stop said links.

10. Traffic control apparatus according to any of claims 2 to 9, wherein when the number of cells queued in the queuing area of a hop is equal or lower than the low global threshold (65) and if the links entering said hop are already globally backpressured, said hop sends backwards on said entering links a global backpressure with the 'global start said entering links' information in order to globally restart said links.

11. Traffic control apparatus according to any of claims 2 to 10 wherein a selectively stopped connection can only be restarted if said connection receives a selective start backpressure and if said link containing said connection is not globally backpressured, and a globally stopped link can only be restarted if said link receive a global start backpressure.

12. Traffic control apparatus according to any of the preceding claims wherein a hop comprises counting means (6202) associated with each link (620) entering said hop for counting extra cells received from said entering link after said hop has sent a global stop backpressure to said entering link and when counting value of said entering link is greater or equal than the round trip delay of said entering link, said extra cells from said entering link are discarded and said hop retransmits said global stop backpressure to said entering link.

13. Traffic control apparatus according to any of the preceding claims wherein a hop comprises counting means (613) associated with each connection entering said hop for counting extra cells received from said connection after said hop has sent a selective stop backpressure to said connection on the link comprising said connection and when counting value of said connection is greater or equal than the round trip delay of said link comprising said connection, said extra cells from said connection are discarded and said hop retransmits said selective stop backpressure to said connection.

14. Traffic control apparatus according to any of the preceding claims wherein a part of the reserved bandwidth is reserved for the control traffic of the best effort service.

15. Traffic control apparatus according to claim 14 wherein said backpressure information is conveyed by an ATM control cell (100), said cell being transported by said part of said reserved bandwidth reserved for said traffic control of said best effort service.

16. Traffic control apparatus according to claim 15 wherein said ATM control cell (100) can carry from one to twelve selective backpressure informations and one global backpressure information.

17. Traffic control apparatus according to any of the preceding claims wherein a connection is defined either as a switch virtual circuit in an ATM virtual circuit service, or as a virtual circuit in an ATM virtual path service, or as a couple of Medium Access Control ( MAC ) addresses ( MAC source address, MAC target address ) in an ATM local area network emulation service.
